# EUROPEAN PATENT SPECIFICATION

(11) **EP 1 102 945 B1**
(45) Date of publication and mention of the grant of the patent: **15.04.2009**
(21) Application number: 99932521.0
(22) Date of filing: 17.02.1999
(51) Int. Cl.: F16M 1/00, F16M 13/04, F16M 11/10

(54) **MOBILE CAMERA SUPPORT SYSTEM WITH EXTENDIBLE POST AND STIFFENING SYSTEM**
BEWEGLICHES KAMERASTATIV MIT AUSZIEHBARER SAÜLE UND VERSTEIFUNGSVORRICHTUNG
SYSTEME PORTE-CAMERA MOBILE AVEC PIED EXTENSIBLE ET SYSTEME DE RAIDISSEMENT

(30) Priority: 17.02.1998 US 74877 P; 17.02.1999 US 251637; 17.02.1999 US 251598
(43) Date of publication of application: 30.05.2001
(73) Proprietor: BROWN, Garrett W., Philadelphia, PA 19147 (US)
(72) Inventor: BROWN, Garrett, W., Philadelphia, PA 19147 A (US); HOLWAY, Jerry, Exton, PA 19341 (US)
(74) Representative: Grünecker, Kinkeldey, Stockmair & Schwanhäusser Anwaltssozietät
(86) International application number: PCT/US1999/003315
(87) International publication number: WO 1999/041540

(56) References cited:
- CH-A- 546 496
- GB-A- 946 080
- GB-A- 1 280 913
- US-A- 473 357
- US-A- 1 463 446
- US-A- 1 686 678
- US-A- 2 143 649
- US-A- 2 481 717
- US-A- 2 580 120
- US-A- 3 371 589
- US-A- 4 017 168
- US-A- 4 156 512
- US-A- 4 208 028
- US-A- 4 474 439
- US-A- 5 360 196
- US-A- 5 435 515
- US-A- 5 579 071
- US-E- R E32 213
- US-S- D 358 832

## Description

### BACKGROUND OF THE INVENTION

The Steadicam® camera stabilizer has become a mainstay of the motion picture and video industries (see U.S. patent nos. Re. 32,213; 4,017,168; 4,156,512; 4,208,028; 4,474,439; 5,360,196; 5,435,515. and 5.579.071 of preamble of claim 1. The camera stabilizer comprises an expanded camera support (i.e., the "sled"), an operator vest, and an articulated equipoising arm that is attached between the vest and a three-axis gimbal on the camera support. The Steadicam® camera stabilizer permits a camera operator (carrying a camera) to walk, run, climb stairs, etc., while maintaining a stable image. It received an Oscar for Scientific/Technical Achievement in 1978. In the intervening years, a number of problems and new opportunities have been identified, which have not yet been resolved or facilitated by existing Steadicam® equipment.

Since 1979, operators have routinely operated the Steadicam® camera stabilizer with the sled inverted so that the camera is on the bottom and the battery, monitor, etc., are on top. This maneuver facilitates "low-mode" operation which allows the camera lens height to be anywhere between the waist and the knees of the operator. However, it is frequently desirable to have the lens much lower. And in normal "high-mode" operating, with the camera on top, it is frequently desirable to have the lens considerably above the operator's head. Since 1985, to facilitate both of these objectives, operators have fashioned extra-long 72-inch "super-posts" to replace the normal-sized main post of the conventional Steadicam® camera stabilizer. The use of an extra-long post allows for lens heights in low-mode right down to the ground, and, in high-mode, up to nearly 8 feet in the air.

The problem with this arrangement is the time it takes to switch over from the conventional Steadicam® camera stabilizer configuration, and the cost of the components that are owned in duplicate in order to prevent even more time-consuming operations. All super-post designs presently offered to operators require 20 or more minutes to install, even if the operator owns an extra gimbal and even a extra "stage" (i.e.. the adjustable mounting platform for use in attaching and positioning various cameras).

In order to make this changeover, operators must presently disconnect and remove the camera, disassemble the sled, reassemble, re-install, reconnect, etc., and the result is that operators and their clients dread the time taken to change over to (and back from) ultra high-mode or ultra low-mode shooting. Furthermore, operators must frequently spend fifteen thousand dollars or more in order to carry the extra equipment required to prevent even further waste of time.

Note that it is impractical to maintain the Steadicam® camera stabilizer, in the "super-post" mode all the time for two reasons: The Steadicam® camera stabilizer is easier to operate, particularly for rapid moves in close quarters, when it is in its compact normal mode. For routine shooting in this normal mode, the rotational inertia of the sled in the tilt axis is more closely matched to its inertia in the pan axis, which makes it easier to use. Also, because of its enormous length, the "super-post" mode makes it impossible to achieve the most common range of lens heights, which are between the knees and head of the operator.

A further difficulty with existing super-post designs is that even the stiffest carbon-fiber post designs are prone to vibration and "whipping" during high-speed running, violent maneuvers, or shots made while riding in bumpy vehicles.

Problems have also arisen with existing super-post designs, because, with light cameras and corresponding lower gimbal positions (the gimbal needs to be at the center of gravity), the range of monitor positions providing an acceptable line of sight for the operator is severely restricted.

There is another mode of shooting that has always been problematic. A number of operators also own and supply a "running" rig which consists of a dedicated "sled" with a lightweight monitor and battery, so that it will appropriately counterbalance the lightest available camera to facilitate running shots at top speed. These kinds of shots can be dangerous when carrying the 70+ pounds of the conventional Steadicam® rig with all accessories. If an operator owns duplicates of all the necessary components, he or she can have a lightweight running rig standing by for nearly immediate use. However, according to today's most common usage, a large number of ancillary components must also be duplicated and mounted for this purpose, such as a remote video transmitter so the director can watch the shot in progress, and additional wireless focus-pulling equipment so that the camera assistant can adjust the focus of the lens. Therefore, an operator must either be resigned to spending a lot of time or a lot of money in order to provide this running rig to his clients.

U.S. patent no. 5.579.071 discloses the sled of what is marketed as the "Master Series" . Steadicam® camera stabilizer. It provides for quick changeovers, such as low-mode, and for other common adjustments without the use of tools, by providing special finger-operated clamps and locking knobs. With the Master Series sled, an operator can change over to low-mode in seconds - an operation that formerly used to take 10 minutes or more - and can adjust the bottom-heaviness of the sled by moving the gimbal/handle assembly up or down on the post in just a second or two. This "no-tools" philosophy is applied to every operation on the Master Series equipment, including adjustment of the lifting strength of the arm and of the fit of the vest.

Like most Steadicam® rigs, the Master Series rig comes with an expandable post, but its range is severely limited because of the need for the sled to be at a normal size for most shooting. Therefore, even at maximum expansion, the post only lowers or raises the range of lens heights available to the operator by a few inches.

The Master Series equipment provides for increasing and decreasing the rotational inertia of the sled by spreading out the principal masses - by pulling the monitor forward and the battery rearward. This is a useful feature, but constraints of the present configuration of the sled mean that the amount of travel of monitor and battery is quite limited.

Available Steadicam® designs do not provide for independent tilting of the camera. As a result, operators have long endured a number of consequences: In 90% of operating situations, lens heights are maintained above the waist level of actors, and therefore the Steadicam® is normally carried with a slight (3° to 5°) down tilt to accomplish proper framing and "headroom". This has required the whole "sled" (the entire camera support structure) to be tilted, causing a number of problems. Steadicam® sleds are carefully adjusted to be in dynamic balance so that when panned, they spin around the true axis of the central post without precession. This becomes meaningless and counterproductive, when the sled centerpost is not held vertical, since panning now requires this axis to artificially precess around true vertical. In addition, maintaining this perpetual tilt frequently causes physical interference when operators "switch" the equipment from one side of the body to the other, since such a move is more likely to be obstructed by the Steadicam® arm hardware when the sled is tilted down and its lower components are therefore displaced to the rear.

In other cases, more radical tilts up and down have always required correspondingly radical tilts of the entire sled, particularly with long-post operation. Such radical tilts mean that the height of the camera enabled by the long post is immediately reduced because of its arcuate swing forward when the entire long sled is tilted. Of course this also exacerbates the clearance problems encountered when moving through tilt quarters on a set because the post now sticks out considerably, both in front of and behind the operator.

One reason that tilting heads have not been devised previously for Steadicam®s is that use of known designs would tend to cause additional problems. The functioning, for example, of conventional tripod-head-type tilt mechanisms would cause violent changes in the position of the camera's center of gravity, thus requiring elaborate rebalancing. Even the use of known special tripod-head designs that rotate about a point directly above their mounting centerline would unacceptably shift the camera's center of gravity (e.g.) when functioned, since in Steadicam® applications, dynamic balance usually requires that the camera's e.g. be nominally one inch aft from the centerline of the main Steadicam® post. Also, such designs, insofar as is known, would all require excessive size and weight in order to provide for as much as 20° of tilt up and down. Their excessive depth would restrict the range of gimbal positions near the top of the post which are employed to balance the heavier cameras. Also, such conventional tilt heads would obstruct access to any clamps or hardware positioned high on the post just below the camera.

Another problem, even with previous small telescoping posts is getting the internal electrical wires to retract without fouling when the posts are fully shortened.

### Objects of the Invention

An object of the present invention is to provide a "super-post" mechanism that is capable of collapsing to fit within the height of a normal-sized sled, yet which can expand to a full 72-inch length, and do so within a few seconds without tools and without the need to own any duplicate hardware.

It is also an object of the present invention that the rotational inertia of the sled in the pan axis can be greatly increased so that even when the post is fully extended, the pan inertia is at least similar in magnitude to that of the tilt inertia.

It is also an object of the present invention that the sled be equipped to protect against vibration and whipping caused by violent operation while fully extended to its maximum height.

It is also an object of the present invention that the sled provides for near instant changeover to a light monitor and battery for "running" rig operation, while providing that all accessories remain aboard, and a minimum of duplicate hardware is required.

It is also object of the present invention that all other adjustments - including re-balancing and re-adjustment of the new gimbal position - are still accomplished according the "no-tools, instantly-adjustable" philosophy of the Master Series equipment.

It is also an object of the present invention to provide a novel structure for a telescoping post, with means for appropriate gimbal placement and positioning of counterbalancing masses so that it can be statically and dynamically balanced with any combination of post length and selected camera, monitor, and battery weights: and still provide a useable monitor viewing position.

It is also an object of the present invention to provide a tilting head attached between the camera and the centerpost to independently tilt the camera from the orientation of the centerpost, in order to help maintain dynamic balance when the Steadicam® pans around the vertical axis of the said centerpost, with the lens axis at an angle other than horizontal.

It is a further object of the invention to provide a tilting head to independently tilt the camera from the orientation of the centerpost in order to avoid clearance problems and lens height variations caused by tilting the entire Steadicam® sled.

It is also an object of the invention to provide a practical and novel camera tilting head between the camera and the centerpost support, which is small and compact, and which, when functioned, does not cause an unacceptable shift in the camera's e.g. and does not obstruct the region of the top of the said post, so that both normal and extended-post operation can be accomplished with the said post maintained more closely in a vertical position.

The invention is defined by al the features of claim 1.

### DETAILED DESCRIPTION OF PREFERRED EMBODIMENT

A preferred embodiment comprises a novel structure for a telescoping post as follows: A main section adapted to provide an unobstructed range of positions for gimbal and monitor bracket placement, at least one additional telescoping section of lesser diameter between this main section and the camera mounting, and at least another additional telescoping section between the main section and the mounting for the counterbalancing equipment, such as the battery. The telescoping post includes monitor and battery mountings adapted to be positioned at varying perpendicular distances from the post. The structure is therefore adapted to be balanced statically and dynamically throughout the entire range of possible post lengths, and with any combination of selected camera, monitor, and/or battery weights. As used herein the term camera refers to any sensing or imaging device or any means for capturing an image or information. As used herein the monitor refers to any viewable display, viewing means, or any other counterbalancing element. As used herein the battery refers to any counterbalancing mass.

This lateral positioning of the monitor and battery is preferably accomplished with mounting rods extending from clamps fixed to one or more of the tubes, which also therefore provides control over the magnitude of the rotational inertia of the sled in the pan axis.

Referring further to the portion of the post assembly between the main post and the battery (counterbalancing equipment), a preferred embodiment comprises two additional annular posts of increasing diameter, both larger than the main post, and positioned between the main post and the , counterbalancing equipment. The first of these posts is preferably adapted for the mounting of the monitor assembly. The outermost and largest of these posts is adapted for the mounting of the counterbalancing equipment such as the battery. In this preferred embodiment, each of the four total posts is adapted for the mounting of one part of the equipment, such as follows: The smallest diameter (topmost) post holds the camera supporting stage. The next larger diameter "main" post holds the gimbal mount . The third largest annular post holds the monitor support, and the largest post holds the battery and other counterbalancing equipment. This arrangement provides the maximum flexibility of positioning for the various components in order to appropriately counterbalance the broadest range of camera weights. Neither of the two largest additional posts is longer than approximately half the length of the main post, so that sufficient room for a range of gimbal positions still remains above the posts (and associated equipment) during fully collapsed "normal" operating.

This arrangement also provides maximum flexibility of positioning for other purposes including monitor viewing, lens height, clearance to avoid obstruction, and similar.

Another preferred embodiment comprises a single additional telescoping post of lesser diameter than the main post, between the main post and the battery mounting. In this embodiment, the battery is mounted to an annular partial cylinder of greater diameter than the main post. This partial cylinder is adapted for mounting of the battery and the counterbalancing equipment. The cylinder is attached to the base of the inner post, and it is "partial" because it is notched for access to the locking clamp for the inner post. This partial cylinder telescopes over the main post when the inner post is fully collapsed. This partial cylinder should also preferably not exceed half the length of the main post, in order to provide a range of appropriate gimbal positions to balance the sled during "collapsed" or normal operation.

Prevailing expert operation of the Steadicam® camera stabilizer generally requires that the gimbal be positioned approximately at the center of gravity of the entire sled. Both of the above preferred embodiments provide that, even with a light camera and heavy monitor and battery, there will be sufficient room on the main post for an acceptable range of gimbal and monitor positions to facilitate operating and viewing, respectively.

Dampening of the vibration inherent in energetic "super-post" operation or as experienced during violent vehicle shooting or high-speed running situations (even with normal post lengths) is provided by the deployment of a plurality of stays or "shrouds" consisting of tensioning wires or non-stretch lines passing over add-on spreaders or other mounting points such as hooks attached to points such as the monitor equipment or battery equipment which points are appropriately displaced from the centerline of the main post. The shrouds are adapted to function at any post length to stiffen the post uni-directionally along each of a plurality of approximately perpendicular axes. Spreaders can be attached to an add-on clamp on the main post, or to the monitor hardware and the shrouds can be deployed between attachment means up close to the camera and near the base of the lower post. The shrouds are deployed over the said spreader means and tensioned, preferably, by extending one of the telescoping post sections to slightly stress the column of the post, or by pulling tight one end of a single length of non-stretch line (such as Spectra®, which has been continuously threaded bidirectionally from, by way of example, a point near the top of the battery, down to and under an attachment point at the base of the post system, up and over one of the "spreader" points (either extending from the post, or attached to the monitor equipment), and on up and over an attachment point near the camera mount: and then back down via a different spreader point (displaced from the first, to provide another direction of stiffening) and continuing down under an attachment at the bottom of the post, and up to the top of the battery for final tensioning and attachment by conventional means. This will cure the normal magnitude of vibrations. Although this system would seem not to add stiffness against a sudden vibration of the gimbal toward an anterior direction, in usual operation, the centerpost is pre-stressed and slightly bowed by the shrouds in the direction of the spreaders employed, and therefore resists this anterior vibration up to a magnitude that would exceed the degree of this pre-stressing. Depending on the violence of the shot, and whether the operator's position remains constant relative to the sled, it is possible to add a third spreader and additional shroud. These stiffening shrouds permit the use of extremely lightweight carbon fiber post sections. Otherwise, the posts would have to be heavier and perhaps of larger diameter in order to be sufficiently rigid.

Preferably, between the camera mounting stage and the main support post, a tilting-head is provided to permit changing the tilt attitude of the camera independent of the typically vertical angle of the centerpost. In a preferred embodiment, this tilt head is arranged to provide the lowest possible vertical profile and the least obstruction to the hardware at the top of the post consistent with the ability to tilt the camera approximately 20° up and down with reference to the said post. Preferably this tilt head comprises sleeves attached to, and flanking, the top of the centerpost with through-bolts to which a symmetrical arrangement of arcuate slots can be slidably positioned and clamped--said arcuate slots being cut into a plurality of opposed rigid arcs depending from the camera mount. As used herein, the term slot refers to an opening or any position registering surface or means for securably adjusting angular position or registration.

Preferably the said slots are concentric to a point in space coincident with the mean center of gravity of the range of cameras appropriate to Steadicam® use--which point is typically displaced rearward from the centerline of the mounting post in order to preserve dynamic balance. Preferably, there are two sets of paired laterally symmetrical arcuate slots, of differing radii such that each sleeved bolt engages its own pair of slots, with the rearward sleeved bolt engaging the slots of the smallest radius, thus providing additional vertical clearance for functioning components associated with the upper anterior surface of the centerpost. In addition, preferably, the arcuate slots extend a short distance at the forward end in a non-arcuate direction, adapted to allow continued tilting by substituting a small vertical shift in the camera's c.g., but preserving its lateral position, thus allowing additional tilt in the direction which would otherwise be more readily obstructed because the said preferable center of tilt rotation is to the rear of the centerline of the centerpost.

In one embodiment, the invention is a telescoping post for a Steadicam®-type camera stabilizing camera support comprising: (a) a first section adapted to provide a range of positions for clamping a gimbal assembly, and for clamping a monitor or other equipment: (b) a second telescoping post of lesser diameter extending to a camera support assembly; (c) a third telescoping post extending in the opposite direction to the assembly for mounting counterbalancing equipment (e.g., a battery): (d) extending means to adjustably position the monitor in and out along a line roughly perpendicular to the main post; (e) extending means to adjustably position the battery in and out from an additional post: and (f) removable shroud and spreader means to dampen vibration when post is fully extended.

The present invention includes a novel method and device for retracting electrical wires running within the oversized telescoping posts when they are fully shortened. A preferred embodiment provides a spiral coil of said wires with each turn attached at the point where it crosses a length of surgical rubber run up the inside of and parallel to the axis of the said coil. The method of accomplishing this is to slightly pre-stretch and attach it lengthwise along a mandril of suitable size to wind a coil which will fit into the smallest of the said telescoping posts. A loose bundle of wires can then be wrapped around the said mandril in a spiral coil, passing over the said surgical rubber. Each turn of this coil is then attached by means of, for example, "Zipties" to the surgical rubber at each point where they cross. The mandril is then removed, and the resulting coil exhibits the properties of a "curlycord", but without the diameter ' and excess weight of the "curly" jacket.

### BRIEF DESCRIPTION OF THE DRAWINGS

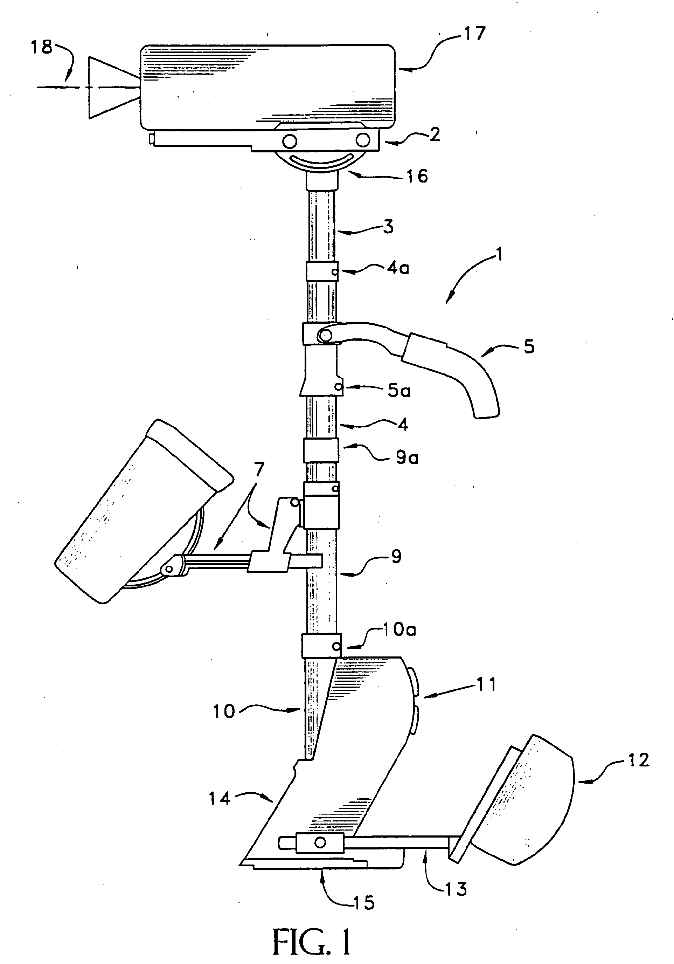

FIG. 1 is an elevational view of a preferred embodiment not fully in accordance with the invention and showing a telescoping post for a Steadicam®-type camera stabilizing support comprising:
   (a.) a first post adapted to provide a range of positions for clamping a gimbal assembly and for optionally clamping a monitor or other equipment;
   (b) A second telescoping post of lesser diameter extending to a camera support assembly; preferably with a tilting head between post and camera assembly;
   (c) a third annular telescoping post of larger diameter than the first section extending in the opposite direction to the camera assembly for preferably mounting monitor supporting equipment;
   (d) extending means to adjustably position the monitor in and out along a line roughly perpendicular to the post and
   (e.) preferably a fourth (largest) annular post for mounting counterbalancing equipment such as a battery, including extending means to adjustably position the said battery in and out perpendicularly from the said additional post.

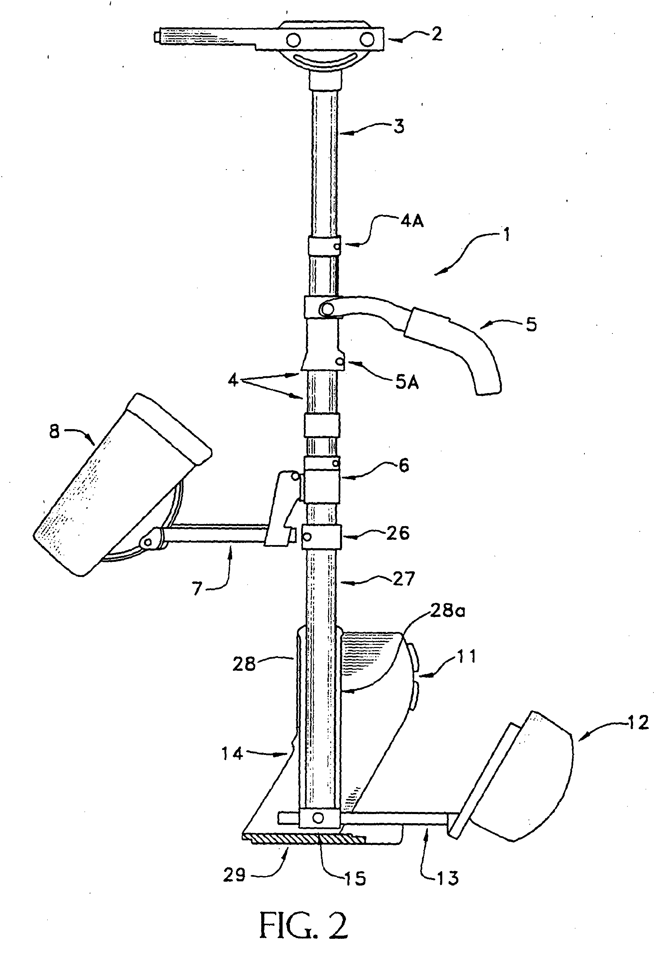

FIG. 2. is an elevational view of another embodiment, comprising:
   (a) a first section adapted to provide a range of positions for clamping a gimbal assembly, and for clamping a monitor or other equipment:
   (b) a second telescoping post of lesser diameter extending to a camera support assembly;
   (c) a third telescoping post of even smaller diameter that the second, extending downward from the main post and enabling the maximum possible total expansion of the battery-to-camera distance;
   (d) a u-shaped annular channel for holding additional counterbalancing equipment such as the battery attached to the bottom of this third post, and providing access to the clamping hardware for the said third post via its open slot.
FIG. 3 is an elevational view of an embodiment of the removable "shroud and spreader" means employed to dampen vibration when post is fully extended, comprising:
   (a) a plurality of spreaders, removably clamped to approximately the middle of the main section of post;
   (b) a plurality of shrouds extending over the spreaders between mounting means located at approximately the top and bottom of the Steadicam®
FIG. 4. is a perspective view of a computer rendering of the new Steadicam® of the present invention showing the removable continuous shroud means tensioned using optional standoffs on the sides of the monitor as spreaders, comprising:
   (a) attachment points for the path of the continuous shrouds: start and termination points at battery, "hooks" adapted for continuous lacing of non-stretch line at camera, base and monitor
   (b) lacing path of the continuous shroud.
FIG. 5 is a computer rendering of the new Steadicam® showing the relationship between telescoping post, moveable monitor and battery equipment mountings and a novel compact tilt head.
FIG. 6 is a detailed exploded drawing of a novel compact tilt head.
FIG. 7 is a perspective computer rendering illustrating the assembled parts of the novel compact tilt head.
FIG. 8 is a diagrammatic illustration of center of rotation of arcuate slots.
FIG. 9 is a diagrammatic illustration of the displacement of camera's c.g. when the compact tilting head engages non-arcuate portions of slots.
FIG. 10 is a computer rendering of the new Steadicam® in a "running" rig mode showing the relationship between the telescoping posts, a lighter monitor and lighter battery, with a novel tilt head.
FIG. 11 is a diagram of step one and step two of the method for fabricating the ultralight curlycord employed for retracting the internal electrical wires within the telescoping posts without fouling.
FIG. 12 is a diagram of steps three and four, showing the completion of the above fabrication and the resulting ultralight curlycord device.

### DETAINED DESCRIPTION OF THE DRAWINGS

FIG. 1 shows a preferred embodiment of the present invention 1 with its telescoping posts 3, 4, 9, and 10 fully expanded. Stage 2 for mounting camera 17 is of conventional design, but it is preferably separated from post 3 by tilting head 16 which allows independent angular displacement of the camera 17 relative to the post 3 around an axis perpendicular to post 3 and also perpendicular to the lens axis 18 (herein referred to as "tilt"). Post 3 is a telescoping post between the main post 4 and the camera mounting 2 which post is of the smallest diameter of the assembly of telescoping posts.. "Main" post 4 is of the next larger diameter and is preferably employed for the mounting of gimbal/handle 5 (of conventional design), which is clamped at the desired position along post 4 by clamp 5a. Clamp 2a is of conventional design and locks post 3 to post 4 at any desired degree of extension. Post 9 is an additional telescoping post of the next to largest diameter between the main post 4 and the equipment mounting post 10, which preferably holds monitor mounting bracket 6. Said bracket has clamps to hold extending mounting posts 7 for the monitor, which provide adjustable in/out monitor positioning along an axis perpendicular to post 9. Video monitor 8 includes mounting hardware of conventional design for engaging extending posts 7. Clamp 9a locks the selected degree of extension of post 9 relative to the main post.

Final telescoping post 10, of the largest diameter of the four posts, is employed for mounting counterbalancing equipment 11, 14 and the battery mounting 12. and is clamped to post 9 by clamp 10a.

Electronics unit 11 is part of the counterbalancing equipment 14 attached to post 10. Battery and battery mounting 12 are of conventional design and are attached to extending rods 13, which provide adjustable in/out battery positioning along an axis perpendicular to post 10, and are attached to post 10 by clamps 15.

The present invention permits the maximum flexibility of Steadicam® operation. When all four posts 3.4.9. 10 are nested within each other, the assembly 1 is at it minimum height, and all components including monitor 8, gimbal 5 and counterbalancing hardware 11,12,14 are at their optimum positions relative to the useable range of weights of camera 17 so that the gimbal 5 can be placed approximately at the overall center of gravity of assembly 1. As the posts are extended to achieve higher lens heights (or lower lens heights in so-called "low-mode" operating), the operator can select the order and magnitude of post extensions in order to preserve the correct gimbal position. In addition, the operator can extend the monitor 8 and battery 12 further apart from the post assembly in order to increase the "pan"-inertia of the entire assembly 1, so that it more closely resembles the magnitude of the inertia felt when tilting the entire lengthened assembly 1. It has been found useful, even in ordinary operating with conventional post lengths, to have control over the pan-inertia of the sled. Shots involving quick panning motions are facilitated by keeping masses such as monitor 8 and battery 12 closer together, and the resulting smaller radius of rotation provides lower rotational inertia. Slow moving shots or those that don't involve panning are made much more inert, and therefore stable, in the pan axis by pulling the monitor and battery apart. The present invention provides for unprecedented separation distances between these components (and respectively from the centerline of the post), which therefore yields a mathematical increase in the pan-inertia by the square of the lengthened radius of rotation

"Panning" a camera, even one that is tilted so that its lens axis is not horizontal, according to common practice in the TV and Motion Picture industries, almost always means rotating the said camera around an axis that is vertical. The present invention permits a Steadicam® operator to pre-tilt camera 17 by functioning the tilt-head 16 to achieve a lens axis 18 that is other than perpendicular to the post assembly. This helps preserve the verticality of the said post axis and therefore facilitates panning the Steadicam® around the said vertical axis without fighting the precession forces that previously have always accompanied operators' attempts to pan a tilted Steadicam®. Although Steadicam®s have been adjusted for years to be in dynamic balance, it has always, insofar as is known, been accomplished with reference to a vertical post, and therefore has only been a useful practice when panning a truly horizontal lens axis around the said true vertical axis.

"Pre-tilting" the tilting head 16 is also useful to at least partially obviate the clearance problems associated with a tilted post, since this reduces the degree to which the said tilted post sticks out ahead of or behind the operator. Pre-tilting also can help preserve the overall lens height achieved by the extended post assembly, which would be otherwise progressively reduced as the post departs from vertical.

FIG. 2 shows an elevation of another preferred embodiment in which the extended post assembly consists of camera mounting stage 2 attached to post 3, which is the second-largest of the three posts in this embodiment. Post 4 has the largest diameter and holds the gimbal and gimbal clamp 5, 5a, and the monitor 8 and its mounting equipment 6,7, and is clamped to post 3 by clamp 4a, and to post 27 by clamp 26. Post 27 has the smallest diameter of the three posts, and telescopes from inside the other two toward the counterbalancing equipment 11. 14 and battery equipment 12, 13, 15. Said counterbalancing equipment is, in this embodiment, mounted to partial cylinder 28 which is itself attached to base. 29 in a conventional manner. Base 29 is also attached to the bottom of post 27, so that when the posts 3 and 27 are collapsed within post four, this assembly is overlapped by partial cylinder 28. and its integral slot 28a provides access to clamp 26.

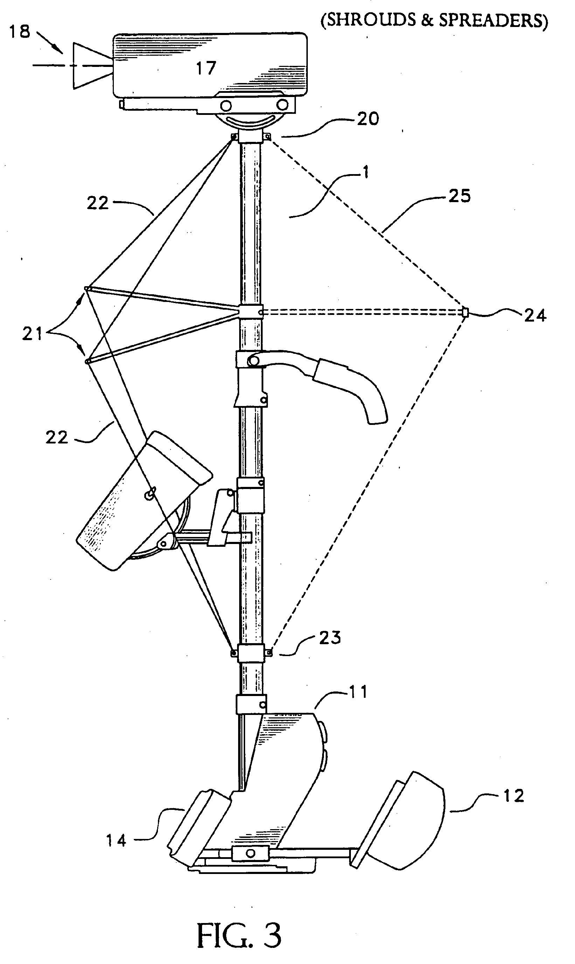

FIG. 3 is an elevational view of an embodiment of the removable "shroud and spreader" means employed to increase rigidity and dampen vibration when post assembly 1 is fully extended. It comprises a plurality of spreaders 21, removably clamped to approximately the middle of the main section of the post assembly and a plurality of shrouds 22 extending over the spreaders between removable shroud termination means 20, 23 located at respectively the top and bottom of the post assembly 1.

As the post length of a Steadicam®-type stabilizing system is increased, unless the diameter and wall-thickness of the post assembly 1 is unacceptably increased, it will be subject to torsional whipping caused by the fact that the said assembly is moved and controlled at roughly its center through the gimbal assembly 5, but the effective lever arms out to the masses 17 and 11,14,12 at the extremities have been enormously lengthened. Vibrations induced at the said gimbal will therefore cause angular vibrations of the camera lens axis 18, which would effectively preclude energetic deployment of the system. The present invention provides removable stiffening equipment that can be deployed for typical "long-post" operating, and also, as needed, for normal-post operating involving violent shaking, such as during vehicle shots over rough ground, or high-speed running shots on foot. Depending on the violence of the shot and whether the operator's position remains constant relative to the sled, it is possible to add a third spreader 24 and additional shroud 25 for an additional axis of stiffening. The shrouds of the present invention, permit the use of extremely lightweight carbon fiber post sections. Otherwise, the posts would have to be heavier and perhaps of larger diameter in order to be sufficiently rigid for Steadicam®-type operation.

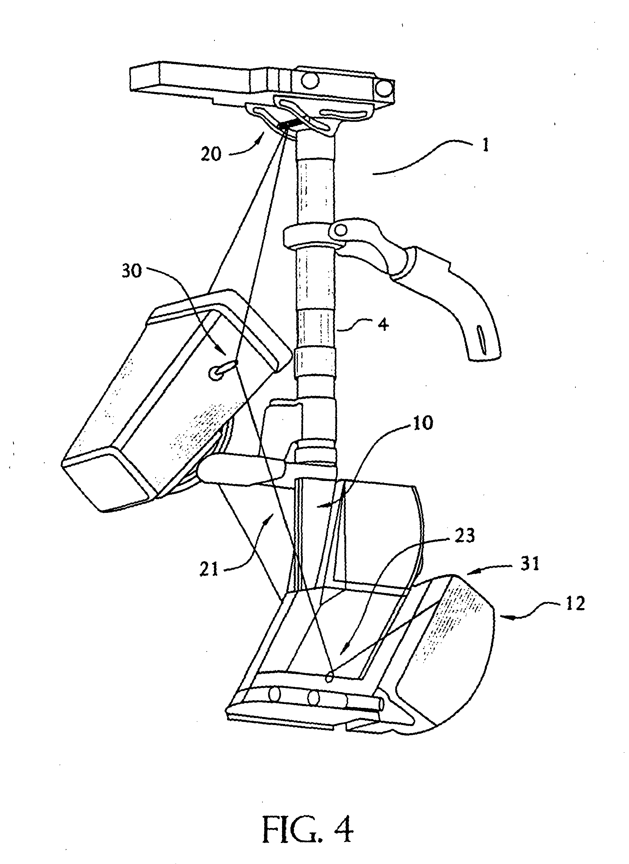

FIG. 4 is a perspective view of a computer rendering of the new Steadicam® showing a preferred embodiment of the stiffening equipment, showing removable continuous staying or "shroud" means 21 tensioned and directionally separated using optional standoffs 30 attached to the monitor equipment 8 as spreaders, comprising attachment points 20, 23 for the path of the continuous shrouds.

Dampening of the vibration inherent in energetic "super-post" operation or as experienced during violent vehicle shooting or high-speed running situations (even with normal post lengths) is provided by the deployment of a continuous stay or "shroud" 21 consisting of a tensioned non-stretch line passing over add-on spreaders 30 or other mounting points such as hooks attached to points such as the monitor equipment 8 or battery equipment 12, which points are appropriately displaced from the centerline of the main post 4. The shroud 21 is adapted to function at any post length to stiffen the post uni-directionally along a plurality of approximately perpendicular axes. Spreaders can be attached to the, monitor hardware 7 and the shroud can be deployed between attachment means up close to the camera 20 and near the base 23 of the lower post 10. The, shroud is deployed over the said spreader means and tensioned, preferably, by extending any one of the telescoping post sections to slightly stress the column of the post, or by pulling tight one end of a single length of non-stretch line (such as SpectraO), which has been continuously threaded bidirectionally. A preferable threading path, for example, might be from a point near the top of the battery 31, down to and under an attachment point at the base of the post system 23, up and over one of the "spreader" points 30 (either extending from the post, or attached to the monitor equipment), and on up and over an attachment point 20 near the camera mount: and then back down via a different spreader point (not shown) which is angularly displaced from the first, to provide another axis of stiffening, and thence continuing down under another attachment at the bottom of the post (not shown), and up to the top of the battery for final tensioning and attachment by conventional means. This will cure the normal magnitude of vibrations. Although this system would seem not to add stiffness against a sudden vibration of the gimbal toward an anterior direction, in usual operation, the centerpost is pre-stressed and slightly bowed in the direction of the spreaders employed, and therefore resists this anterior vibration up to a magnitude that would exceed the degree of this pre-stressing. It is therefore entirely functional for the purpose of stiffening the extended post assembly 1, without interfering with the operators hands and body anterior of the post assembly.

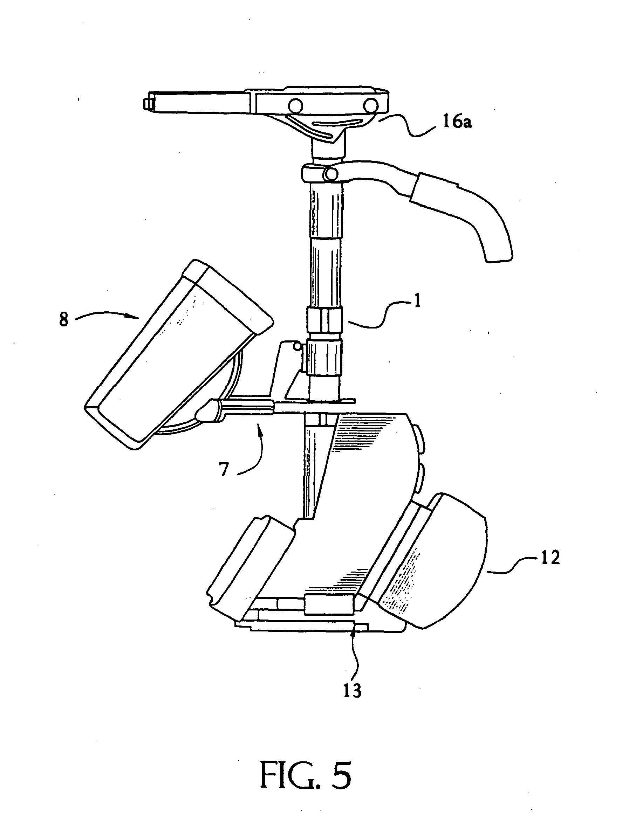

FIG. 5 is a computer rendering of the new Steadicam® in its fully compact mode, showing the relationship between telescoping post assembly 1, moveable monitor 7,8 and battery equipment mountings 12. 13 and a novel compact tilt head 16a.

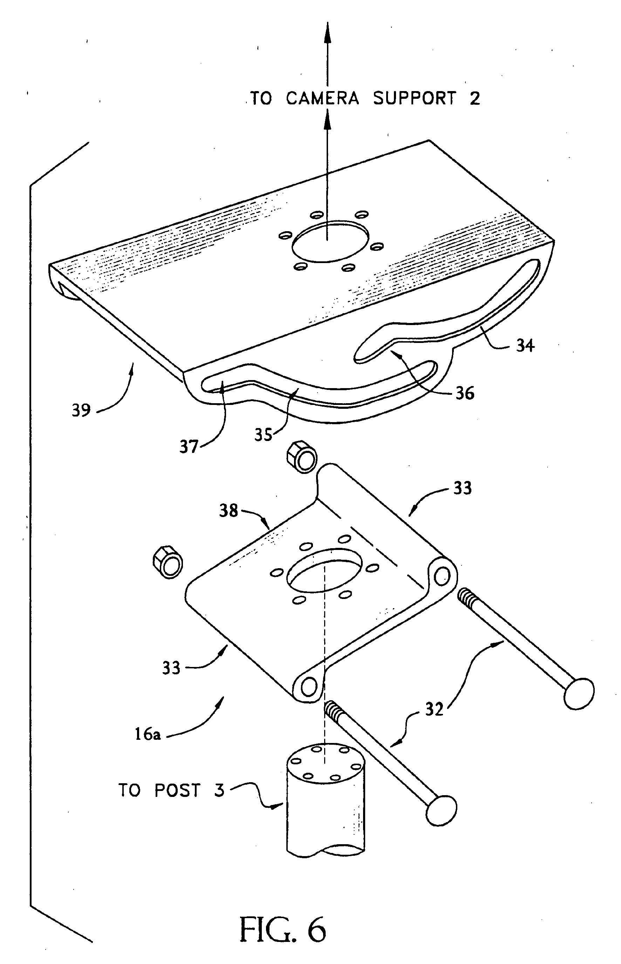

FIG. 6 is a detailed exploded drawing of a preferred embodiment of the novel compact tilt head 16a of the present invention. Preferably, between the camera mounting stage 2 and the adjacent support post 3, a tilting-head is 16a provided to permit changing the tilt attitude of the camera 20 independent of the typically vertical angle of the centerpost 3. In a preferred embodiment, the tilt head 16a is arranged to provide the lowest possible vertical profile and the least obstruction to the hardware at the top of the post consistent with the ability to tilt the camera approximately 20° up and 33° down with reference to the said post axis. Preferably this tilt head comprises sleeves attached to, and flanking a plate 38 bolted to the top of the centerpost 3 with through-bolts 32 to which asymmetrical pairs of arcuate slots 34, 35 can be slidably positioned and clamped--said arcuate slots being cut into a plurality of opposed rigid arcs depending from a plate 39 attached to the camera mount 2. A non-arcuate continuation of the slots 36, 37 permits further tilting in the direction that would otherwise be obstructed by the camera mount because the preferable center of the said arc of tilting is displaced anterior to the centerline of the centerpost.

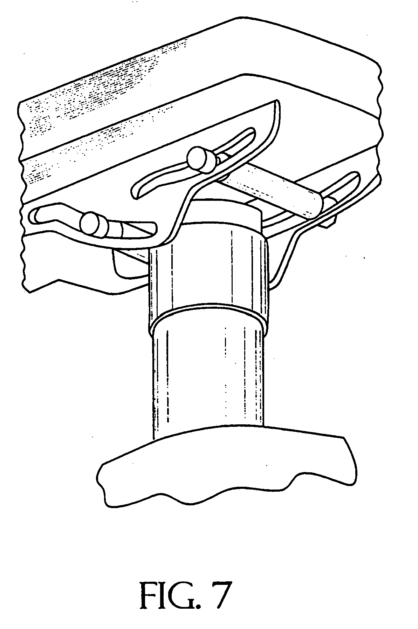

FIG. 7 is a perspective computer rendering illustrating the assembled parts of the novel compact tilt head 16a, including bolts 32, sleeves 33, and semi-arcuate slots 34. 35.

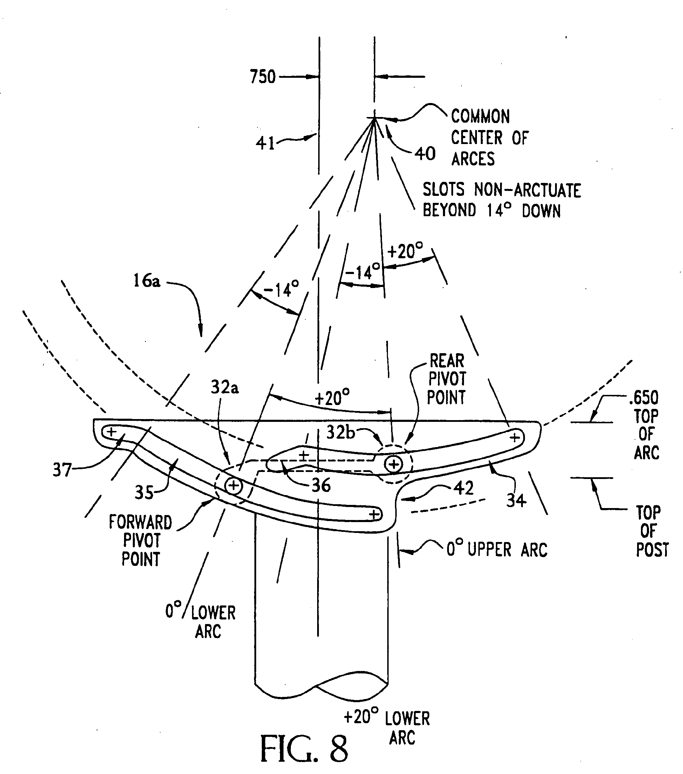

FIG. 8 is a diagrammatic illustration of center of rotation of the arcuate slots 34, 35 of the compact tilting head 16a of the present invention. Preferably the said slots are concentric to a point in space 40 coincident with the mean center of gravity of the range of cameras appropriate to Steadicam® use--which point is typically displaced rearward from the centerline of the mounting post 41 in order to preserve dynamic balance. Preferably, there are two sets of paired laterally symmetrical arcuate slots 34, 35, of differing radii such that each sleeved bolt engages its own pair of slots, with the rearward sleeved bolt 32b engaging the slots of the smallest radius 34, thus providing additional vertical clearance for functioning components associated with the upper anterior surface of the centerpost 42. In addition, preferably, the arcuate slots extend a short distance at the forward end in a non-arcuate direction, adapted to allow continued tilting as will be illustrated in FIG. 8

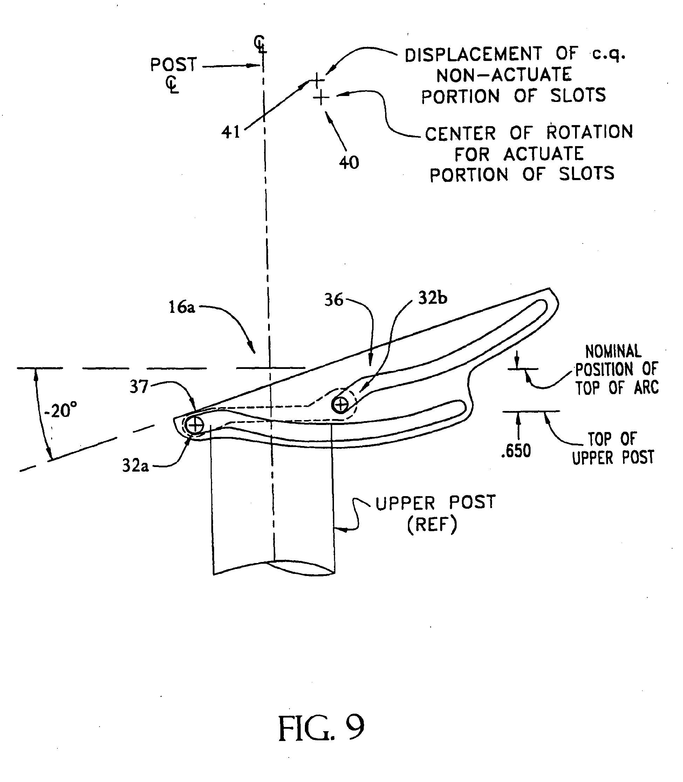

FIG. 9 is a diagrammatic illustration of the displacement of camera's e.g. when the clamping bolts 32a, 32b of the compact tilting head of the present invention engage non-arcuate portions of slots 34, 35. The non-arcuate portions 36, 37 of the slots 34, 35 act on the forward extremity of the camera's tilt (from 14° to 20° in this example), to increase the effective radius of the said slots and cause a small vertical shift of the center of rotation up to point 41. This preserves the rough lateral position of the mean camera e.g. (the center of rotation 40) and eliminates extreme rebalancing of the camera support 2 (not shown), while at the same time permitting additional tilt in a direction which would otherwise be more readily obstructed because the said preferable center of tilt rotation is to the rear of the centerline of the centerpost.

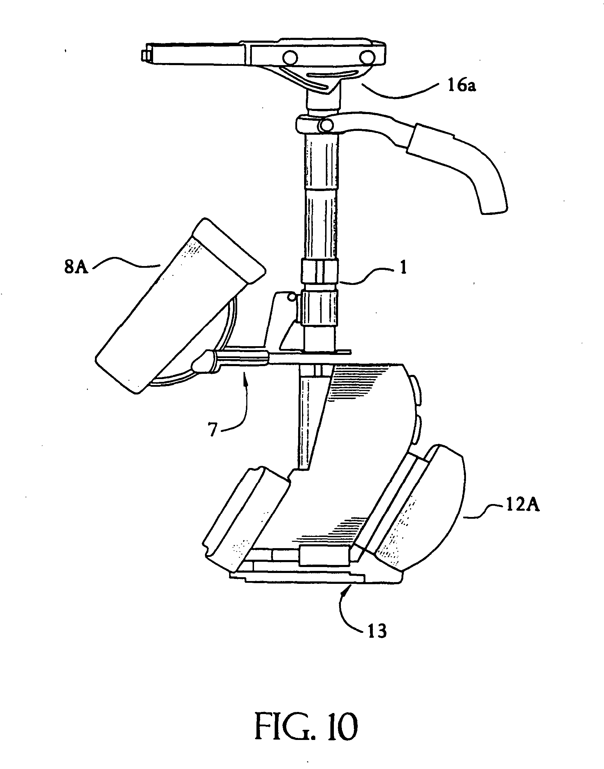

FIG. 10 shows a preferred embodiment of the present invention from a perspective view in a "running" rig mode showing the relationship between the telescoping posts and the lighter monitor 8a and battery 12a with a novel tilt head. The "running" rig mode, comprises a lightweight battery and a lightweight monitor mounted on the Steadicam®. In this embodiment, the lighter weight components result in net decrease to the weight of sled and enable an operator to more easily run with and move the sled. The monitor and battery mountings remains adapted to be positioned at varying perpendicular distances from the post so the structure is adaptable to be balanced statically and dynamically with varying lighter weight equipment. Similarly, the position of the lighter battery and monitor is adjustable to provide control over the magnitude of rotational insertion of the sled in the pan axis.

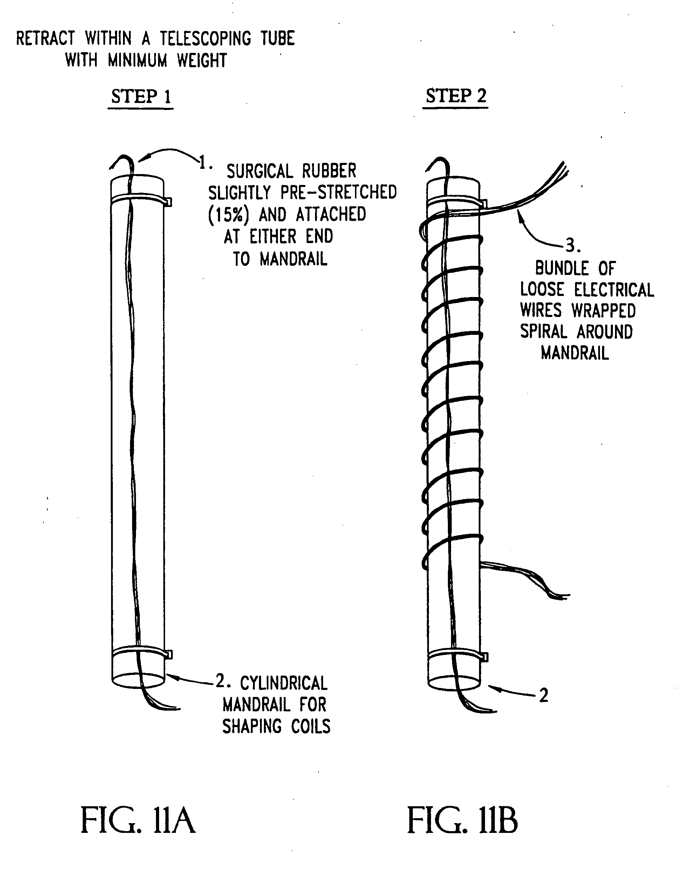

FIG. 11 diagrams the method of fabricating the ultralight retracting device for preventing fouling of the internal electrical wires 3 when the telescoping posts (not shown) are fully shortened. Step 1. shows a slightly pre-stretched elastic cord, such as a surgical rubber cord 1 attached at either end of a cylindrical mandril 2. Step 2. shows the spiral wrapping of a bundle of loose electrical wires 3 along the mandril 2. and crossing the surgical rubber 1.

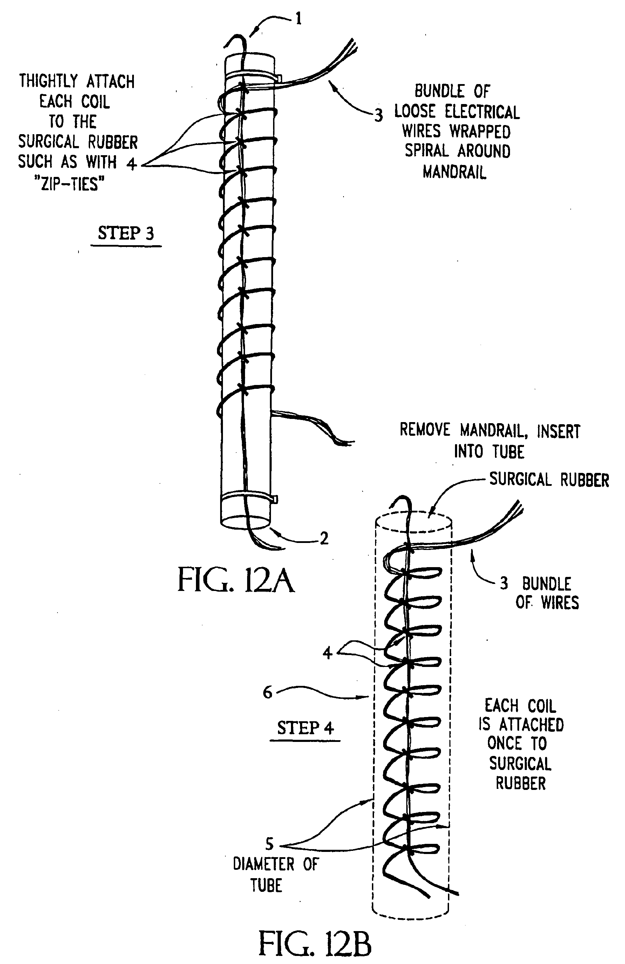

FIG. 12 shows Step 3 and step 4 of the method of fabricating the ultralight curlycord device 6. In Step 3, the spiral coil of wires 3 is attached, once each turn, by means of ties 4 at each point where the wires cross the surgical rubber cord 1. In Step 4, the mandril 2 is removed and the coil is inserted in the smallest section of telescoping post (indicated by dotted lines 5. This ultralight curlycord device 6 provides more powerful retracting ability than traditional heavy curlycords, without the heavy weight of the traditional plastic jackets, heat-treated to retain "memory".

It will be further understood that various changes in the details, materials, and arrangements of the parts which have been described and illustrated in order to explain the nature of this invention may be made by those skilled in the art without departing from the scope of the invention as expressed in the following claims.

## Claims

1. A mobile camera support system, comprising:
a portably extendable and retractable telescoping stabilizing support system (1) for receiving and dynamically balancing a plurality of elements (8, 12, 17) during use, comprising
an elongated main support member (4) having a proximal end adapted to adjustably receive and removably secure the main support member (4) to a secondary support system (9, 10, 27, 28), and a gimbal means (5) adjustably positioned at the support system's center of gravity;
the secondary support system (9, 10, 27, 28) having a distal end and a proximal end, comprising a base support member (10, 28), at least one telescoping secondary support member (9, 27) extendable and retractable from within the base support member (10, 28), a base at the secondary support member's (9, 27) proximal end removably secured to the base support member (10, 28), and comprising a means for movably and fixedly positioning a plurality of elements (8, 12), wherein each element is adaptably adjustable and removably securable and wherein at least one element (8) is adjustably moveable along either the main support member (4) or the secondary support member (9, 27), for counterbalancing and maintaining dynamic balance of the support system; and
an adaptably adjustable and removably securable viewing element (8);
whereby rotational inertia of the support system can be increased in a pan axis as the adjustably secured elements (8, 12) are cooperatively oriented in relation to the telescopically extendable and retractable support members to maintain the support system balance,
**characterized in that**
the elongated main support member (4) has a distal end adapted to adjustably receive and removably secure a primary support system (3), and
the primary support system (3) is extendable and retractable from within the main support member (4) having a distal end and a proximal end, comprises at least one telescoping primary support member (3) slidably movable to a predetermined distance from within the main support member (4) between the retracted position and the extended position, and an angularly adjustable and pivotally tiltable camera support means (2) removably secured on the distal end of the primary support member (3) furthest remote from the main support element (4) to adjustably receive and removably secure the camera (17) in a predetermined position,
wherein the primary support system (3) comprises a plurality of telescoping primary support members wherein each member's diameter decreases in relation to a member's distance from the main support member.

2. The support system of claim 1 being adapted to sequentially slide into each other, wherein the furthest remote member from the main support member is slidably moveable into a next furthest member and so on sequentially.

3. The support system of claim 1, wherein a proximal end of the telescoping primary member nearest the main support member is adaptably extendable and retractable from within the distal end of the main support member.

4. The support system of claim 1, wherein an adaptably adjustable and removably securable camera is positioned on the angularly adjustable and pivotally tiltable camera support means.

5. The support system of claim 1, wherein one of the elements is an adaptably adjustable and removably securable viewing means.

6. The support system of claim 5, wherein the viewing means is an adaptably adjustable and removably securable monitor.

7. The support system of claim 1, wherein one of the elements is an adaptably adjustable and removably securable mass.

8. The support system of claim 7, wherein the mass is an adaptably adjustable and removably securable battery.

9. The support system of claim 1, wherein the base support member is an annular cylinder adaptably adjustable to receive a proximal end of the secondary support member.

10. The support system of claim 9, wherein the cylinder has an adapted open longitudinal section to allow access for adjustment and insertion and removal of the secondary support member into the cylinder.

11. The support system of one of claims 1 to 10,
wherein the angularly adjustable and pivotally tiltable camera support means is adjustably secured to the distal end of the primary support system for the fixedly angular maneuvering and securing of an adaptably adjustable and removably secured camera, having a center of rotation at a point that is congruent to the center of gravity of an element, that is supported on a support plate and is distanced from a vertical-centerline of the primary support system, whereby an approximate dynamic balance is maintained during operation of the apparatus and the camera, comprising
an inner plate having an inner connection means for adaptably receiving and removably securing the inner plate to the distal end of the primary support system,
an inner mounting means for adaptably and removably securing the inner plate to a support plate, the support plate having a plate connection means for adaptably receiving and removably securing the support plate to the distal end of the primary support system,
a plate receiving means for adaptably receiving and removably securing the inner plate,
an element receiving means for adaptably receiving and removably securing the element,
an adjustably releasable and removably securable tilting means comprising a plurality of sets of paired laterally symmetrical openings for adaptably tilting and adjustably positioning the support plate and removably secured element to a predetermined position, wherein an opening comprises a slot or other angular registration positioning means for enabling adjustment,
an adjustable apparatus securing means for adaptably and adjustably securing the apparatus in a predetermined angular position in relation to the distal end of the primary support member.

12. The support system of claim 10, wherein the sets of paired openings are adaptably configured to allow for adjusting and sliding the apparatus to any position along the opening to adjust the angular movement of the apparatus.

13. The support system of claim 10, wherein each opening in a paired opening has a differing radii wherein the radii are concentric to a point in space coincident with a center of gravity of an element removably secured on the apparatus for providing additional vertical clearance.

14. The support system of claim 13, wherein an opening is at least partly-arcuate.

15. The support system of claim 14, wherein the openings are adaptively featured to permit a vertical shift in the center of gravity of the element removably secured on the support plate while maintaining the element's lateral position.

16. The support system of claim 13, wherein the element is a camera.

17. The support system of one of claims 1 to 16, further comprising:
a two-axis stiffening system adapted for increasing rigidity and dampening vibration of the mobile camera support system having a primary support end, and a secondary support end, comprising
a spreader means having a plurality of fixedly adjustable spreader portions removably positioned in one or more positions on the support system, wherein each spreader portion extends outwardly in relation to a spreader mounting means and has an adaptably adjustable shroud receiving means, thereby assisting in dampening vibrations and improving stabilization of the main support member and the elements removably secured to the support system; and
a shroud means between the primary support end and the spreader portion and the secondary support end, comprising: at least one removably threaded shroud, forming substantially a triangular shape along a shroud path from the primary support end to the secondary support end, wherein the shroud is fixedly adjustable and tensilely adaptable for static balancing and horizontal and vertical stiffening of the support system, a shroud terminating means wherein a shroud is adaptably adjusted to be in tensile and is removably secured thereby stiffening the support system along a plurality of approximately perpendicular axes,
whereby the increased rigidity and stiffening improve the operational performance of the support system.

18. The support system of claim 17, wherein the shroud is a non-stretch tensioning member.

19. The support system of claim 18, wherein the member is a wire or line.

20. The support system of claim 18, wherein the member is tensioned by an operator pulling the member taught.

21. The support system of claim 18, wherein the member is tensioned by slidably adjusting a primary support end a secondary support end, or both.

22. The support system of claim 18, wherein at least one of the removably secured elements is included in the shroud path, whereby a member is tensioned by slidably adjusting said removably secured elements.

23. The support system of claim 22, wherein the member is tensioned by an operator pulling the wire taught; slidably adjusting a primary support end, a secondary support end, or both, and slidably adjusting the removably secured elements.

24. The support system of claim 17, wherein the shroud terminating means is removably secured on the removably secured elements.

25. The support system of claim 24, wherein one of the elements is a monitor.

26. The support system of claim 24, wherein one of the elements is a battery.

27. The support system of claim 17, wherein the support system's primary support end and secondary support end are telescopically extendable and retractable.

28. The support system of claim 17, wherein the support system is pre-stressed by tensioning the shrouds to slightly bow the support system in a direction of the spreader positions thereby reducing vibrations in the system.

29. The support system of claim 17, wherein the shroud means comprises a plurality of shrouds.

30. The support system of claim 29, wherein the plurality of shrouds is comprised of a continuous bi-directional member for tensioning the support system.

31. The support system of claim 30, wherein the member being threaded along the shroud path, bi-directionally forms a triangular shape when placed into tension.

32. The support system of claim 31, wherein the support system is bi-directionally stressed by tensioning the continuous member.

33. The support system of one of claims 1 to 32, further comprising:
a device for retracting internal electrical wires within the telescoping system, comprising a spirally coiled bundle of electrical wires adaptably secured at each coil to a pre-stretched elastic member, wherein the elastic member is positioned longitudinally within the spirally coiled bundle.

34. The support system of claim 33, wherein the spirally coiled bundle is wrapped around the exterior of a cylindrical mandril and is positioned longitudinally within the spirally coiled bundle.

35. The support system of claim 11, whereby the support system permits an operator to change a tilt altitude of an element removably secured on the apparatus independent of the support system's vertical angle allowing for balancing of cooperating elements of the support system and reducing support system element physical interferences and clearance problems.

36. The support system of claim 11, wherein tilting of the apparatus along non-arcuate portions of the openings adjusts an element's center of gravity vertically and maintains the element's lateral positioning wherein the element is removably secured onto the apparatus and the additional tilt, in a direction typically prevented by an element support means, is achieved without altering the support system's center of rotation or balance.

37. The support system of claim 11 comprising a camera.

## Patentansprüche

1. Bewegliches Kameratragesystem, das umfasst:
ein tragbar ausziehbares und einschiebbares stabilisierendes Teleskop-Tragesystem (1) zum Aufnehmen und dynamischen Ausbalancieren einer Vielzahl von Elementen (8, 12, 17) während des Einsatzes, das umfasst:
ein längliches Haupt-Trageelement (4), das ein proximales Ende hat, das so eingerichtet ist, dass es das Haupt-Trageelement (4) verstellbar aufnimmt und abnehmbar an einem sekundären Tragesystem (9, 10, 27, 28) befestigt, sowie eine Kardaneinrichtung (5), die verstellbar am Schwerpunkt des Tragesystems angeordnet ist;
wobei das sekundäre Tragesystem (9, 10, 27, 28) ein distales Ende und ein proximales Ende hat, ein Sockel-Trageelement (10, 28), wenigstens ein sekundäres Teleskop-Trageelement (9, 27), das aus dem Inneren des Sockel-Trageelement (10, 28) ausgezogen und in selbiges eingeschoben werden kann, einen Sockel an dem proximalen Ende des sekundären Trageelementes (9, 27) umfasst, der abnehmbar an dem Sockel-Trageelement (10, 28) befestigt ist, und es eine Einrichtung zum beweglichen und stationären Positionieren einer Vielzahl von Elementen (8, 12) umfasst, wobei jedes Element adaptiv verstellt und abnehmbar befestigt werden kann und wenigstens ein Element (8) verstellbar entweder an dem Haupt-Trageelement (4) oder dem sekundären Trageelement (9, 27) entlang bewegt werden kann, um auszugleichen und dynamisches Gleichgewicht des Tragesystems aufrechtzuerhalten; und
ein adaptiv verstellbares und abnehmbar zu befestigendes Sichtelement (8);
wobei das Trägheitsmoment (rotational inertia) des Tragesystems an einer Schwenkachse vergrößert werden kann, wenn die verstellbar befestigten Elemente (8, 12) zusammenwirkend in Bezug auf die ausfahrbaren und einziehbaren Teleskop-Trageelemente ausgerichtet werden, um das Gleichgewicht des Tragesystems aufrechtzuerhalten,
**dadurch gekennzeichnet, dass**
das längliche Haupt-Trageelement (4) ein distales Ende hat, das so eingerichtet ist, dass es ein primäres Tragesystem (3) verstellbar aufnimmt und abnehmbar befestigt, und
das primäre Tragesystem (3) aus dem Haupt-Trageelement (4) mit einem distalen Ende und einem proximalen Ende ausgezogen und in selbiges eingeschoben werden kann, und wenigstens ein primäres Teleskop-Trageelement (3), das gleitend an einen vorgegebenen Abstand aus dem Inneren des Haupt-Trageelementes (4) zwischen der eingeschobenen Position und der ausgezogenen Position bewegt werden kann, sowie eine winklig verstellbare und schwenkend neigbare Kamera-Trageeinrichtung (2) umfasst, die abnehmbar an dem distalen Ende des primären Trageelementes (3) am weitesten von dem Haupt-Trageelement (4) entfernt befestigt ist, um die Kamera (17) an einer vorgegebenen Position verstellbar aufzunehmen und abnehmbar zu befestigen,
wobei das primäre Tragesystem (3) eine Vielzahl primärer Teleskop-Trageelemente umfasst und der Durchmesser jedes Elementes in Bezug auf einen Abstand des Elementes von dem Haupt-Trageelement abnimmt.

2. Tragesystem nach Anspruch 1, das zum sequentiellen Ineinandergleiten eingerichtet ist, wobei das von dem Haupt-Trageelement am weitesten entfernte Element gleitend in ein am zweitweitesten entferntes Element und so weiter sequentiell hineinbewegt werden kann.

3. Tragesystem nach Anspruch 1, wobei ein proximales Ende des primären Teleskop-Elementes, das sich am nächsten an dem Haupt-Trageelement befindet, adaptiv aus dem Inneren des distalen Endes des Haupt-Trageelementes ausgezogen und in selbiges eingeschoben werden kann.

4. Tragesystem nach Anspruch 1, wobei eine adaptiv verstellbare und abnehmbar zu befestigende Kamera an der winklig verstellbaren und schwenkend neigbaren Kamera-Trageeinrichtung angeordnet ist.

5. Tragesystem nach Anspruch 1, wobei eines der Elemente eine adaptiv verstellbare und abnehmbar zu befestigende Sichteinrichtung ist.

6. Tragesystem nach Anspruch 5, wobei die Sichteinrichtung ein adaptiv verstellbarer und abnehmbar zu befestigender Monitor ist.

7. Tragesystem nach Anspruch 1, wobei eines der Elemente eine adaptiv verstellbare und abnehmbar zu befestigende Masse ist.

8. Tragesystem nach Anspruch 7, wobei die Masse eine adaptiv verstellbare und abnehmbar zu befestigende Batterie ist.

9. Tragesystem nach Anspruch 1, wobei das Sockel-Trageelement ein ringförmiger Zylinder ist, der adaptiv verstellt werden kann, um ein proximales Ende des sekundären Trageelementes aufzunehmen.

10. Tragesystem nach Anspruch 9, wobei der Zylinder einen angepassten offenen Längsabschnitt aufweist, der Zugang zum Verstellen und Einführen sowie Herausnehmen des sekundären Trageelementes in den Zylinder bzw. aus ihm heraus ermöglicht.

11. Tragesystem nach einem der Ansprüche 1 bis 10,
wobei die winklig verstellbare und schwenkend neigbare Kamera-Trageeinrichtung verstellbar an dem distalen Ende des primären Trageelementes befestigt ist, um eine adaptiv verstellbare und abnehmbar befestigte Kamera fest winklig zu manövrieren und zu befestigen, die einen Drehmittelpunkt an einem Punkt hat, der mit dem Schwerpunkt eines Elementes übereinstimmt, das von einer Trageplatte getragen wird und von einer vertikalen Mittellinie des primären Tragesystems beabstandet ist, so dass ein annähemdes dynamisches Gleichgewicht bei Betätigung der Vorrichtung und der Kamera aufrechterhalten wird, wobei sie umfasst:
eine innere Platte, die eine innere Verbindungseinrichtung zum adaptiven Aufnehmen und abnehmbaren Befestigen der inneren Platte an dem distalen Ende des primären Tragesystems aufweist,
eine innere Anbringungseinrichtung zum adaptiven und abnehmbaren Befestigen der inneren Platte an einer Trageplatte, wobei die Trageplatte eine Platten-Verbindungseinrichtung zum adaptiven Aufnehmen und abnehmbaren Befestigen der Trageplatte an dem distalen Ende des primären Tragesystems aufweist,
eine Platten-Aufnahmeeinrichtung zum adaptiven Aufnehmen und abnehmbaren Befestigen der inneren Platte,
eine Element-Aufnahmeeinrichtung zum adaptiven Aufnehmen und abnehmbaren Befestigen des Elementes,
eine verstellbar lösbare und abnehmbar zu befestigende Neigeeinrichtung, die eine Vielzahl von Gruppen paariger, in Querrichtung symmetrischer Öffnungen zum adaptiven Neigen und verstellbaren Positionieren der Trageplatte sowie ein abnehmbar befestigtes Element an einer vorgegebenen Position umfasst, wobei eine Öffnung einen Schlitz oder eine andere Winkelausrichtungs-Positioniereinrichtung umfasst, die Verstellen ermöglicht,
eine verstellbare Vorrichtungs-Befestigungseinrichtung zum adaptiven und verstellbaren Befestigen der Vorrichtung in einer vorgegebenen Winkelposition in Bezug auf das distale Ende des primären Trageelementes.

12. Tragesystem nach Anspruch 10, wobei die Gruppen paariger Öffnungen adaptiv konfiguriert sind, um Verstellen und Verschieben der Vorrichtung an jede beliebige Position entlang der Öffnung zum Regulieren der Winkelbewegung der Vorrichtung zu ermöglichen.

13. Tragesystem nach Anspruch 10, wobei jede Öffnung in einer paarigen Öffnung einen anderen Radius hat und die Radien konzentrisch zu einem Punkt im Raum sind, der mit einem Schwerpunkt eines Elementes übereinstimmt, das abnehmbar an der Vorrichtung befestigt ist, um zusätzlichen vertikalen Abstand zu schaffen.

14. Tragesystem nach Anspruch 13, wobei eine Öffnung wenigstens teilweise bogenförmig ist.

15. Tragesystem nach Anspruch 14, wobei die Öffnungen adaptiv strukturiert sind, um eine vertikale Verschiebung des Schwerpunktes des Elementes zu ermöglichen, das abnehmbar an der Trageplatte befestigt ist, und gleichzeitig die Position des Elementes in Querrichtung aufrechtzuerhalten.

16. Tragesystem nach Anspruch 13, wobei das Element eine Kamera ist.

17. Tragesystem nach einem der Ansprüche 1 bis 16, das des Weiteren umfasst:
ein Zweiachsen-Versteifungssystem, das zum Verstärken von Steifigkeit und zum Dämpfen von Vibrationen des mobilen Kamera-Tragesystems mit einem primären Trageende und einem sekundären Trageende eingerichtet ist, wobei es umfasst:
eine Spreizeinrichtung, die eine Vielzahl fest verstellbarer Spreizabschnitte hat, die abnehmbar an einer oder mehreren Positionen an dem Tragesystem angeordnet sind, wobei sich jeder Spreizabschnitt in Bezug auf eine Spreiz-Anbringungseinrichtung nach außen erstreckt und eine adaptiv verstellbare Versteifungs-Aufnahmeeinrichtung hat, um so unterstützend beim Dämpfen von Vibrationen zu wirken und Stabilisierung des Haupt-Trageelementes sowie der Elemente zu verbessern, die abnehmbar an dem Tragesystem befestigt sind; und
eine Versteifungseinrichtung zwischen dem primären Trageende und dem Spreizabschnitt sowie dem sekundären Trageende, die umfasst:
wenigstens eine abnehmbar verschraubte Versteifung, die im Wesentlichen eine Dreieckform entlang eines Versteifungsweges von dem primären Trageende zu dem sekundären Trageende bildet, wobei die Versteifung fest verstellt und unter Spannung angepasst werden kann, um statisches Ausbalancieren sowie horizontale und vertikale Versteifung des Tragesystems zu bewirken, eine Versteifungs-Abschlusseinrichtung, in der eine Versteifung adaptiv so verstellt wird, dass sie unter Spannung steht, und abnehmbar befestigt ist, um so das Tragesystem entlang einer Vielzahl annähernd senkrechter Achsen zu versteifen,
wobei die erhöhte Steifigkeit und die Versteifung das Funktionsverhalten des Tragesystems verbessern.

18. Tragesystem nach Anspruch 17, wobei die Versteifung ein nichtelastisches Spannelement ist.

19. Tragesystem nach Anspruch 18, wobei das Element ein Draht oder ein Seil ist.

20. Tragesystem nach Anspruch 18, wobei das Element durch eine Bedienungsperson gespannt wird, die das Element straff zieht.

21. Tragesystem nach Anspruch 18, wobei das Element gespannt wird, indem ein primäres Trageende, ein sekundäres Trageende oder beide gleitend verstellt wird/werden.

22. Tragesystem nach Anspruch 18, wobei wenigstens eines der abnehmbar befestigten Elemente in dem Versteifungsweg enthalten ist, so dass ein Element gespannt wird, indem die abnehmbar befestigten Elemente gleitend verstellt werden.

23. Tragesystem nach Anspruch 22, wobei das Element gespannt wird, indem eine Bedienungsperson den Draht straff zieht, ein primäres Trageelement, ein sekundäres Trageelement oder beide gleitend verstellt und die abnehmbar befestigten Elemente gleitend verstellt.

24. Tragesystem nach Anspruch 17, wobei die Versteifungs-Abschlusseinrichtung abnehmbar an den abnehmbar befestigten Elementen befestigt ist.

25. Tragesystem nach Anspruch 24, wobei eines der Elemente ein Monitor ist.

26. Tragesystem nach Anspruch 24, wobei eines der Elemente eine Batterie ist.

27. Tragesystem nach Anspruch 17, wobei das primäre Trageende und das sekundäre Trageende des Tragesystems teleskopartig ausgefahren und eingeschoben werden können.

28. Tragesystem nach Anspruch 17, wobei das Tragesystem vorgespannt wird, indem die Versteifungen gespannt werden, um das Tragesystem geringfügig in einer Richtung der Spreizpositionen zu biegen und so Vibrationen in dem System zu reduzieren.

29. Tragesystem nach Anspruch 17, wobei die Versteifungseinrichtung eine Vielzahl von Versteifungen umfasst.

30. Tragesystem nach Anspruch 29, wobei die Vielzahl von Versteifungen aus einem durchgehenden bidirektionalen Element zum Spannen des Tragesystems besteht.

31. Tragesystem nach Anspruch 30, wobei das Element, das auf dem Versteifungsweg verschraubt ist, bidirektional eine Dreieckform bildet, wenn es unter Spannung gesetzt wird.

32. Tragesystem nach Anspruch 31, wobei das Tragesystem durch Spannen des durchgehenden Elementes bidirektional unter Spannung gesetzt wird.

33. Tragesystem nach einem der Ansprüche 1 bis 32, das des Weiteren umfasst:
eine Vorrichtung zum Einziehen interner elektrischer Drähte im Inneren des Teleskopsystems, die ein spiralförmig gewundenes Bündel elektrischer Drähte umfasst, die adaptiv an jeder Windung an einem vorgedehnten elastischen Element befestigt sind,
wobei das elastische Element in Längsrichtung innerhalb des spiralförmig gewundenen Bündels angeordnet ist.

34. Tragesystem nach Anspruch 33, wobei das spiralförmig gewundene Bündel um die Außenseite eines zylindrischen Dorns herum gewickelt ist und in Längsrichtung im Inneren des spiralförmig gewundenen Bündels positioniert ist.

35. Tragesystem nach Anspruch 11, wobei es das Tragesystem einer Bedienungsperson ermöglicht, eine Neigungshöhe eines Elementes, das abnehmbar an der Vorrichtung befestigt ist, unabhängig von dem vertikalen Winkel des Tragesystems zu ändern, so dass zusammenwirkende Elemente des Tragesystems ins Gleichgewicht gebracht werden können und physische Behinderung von Elementen des Tragesystems sowie Probleme bezüglich des Abstandes verringert werden.

36. Tragesystem nach Anspruch 11, wobei Neigen der Vorrichtung entlang nicht bogenförmiger Abschnitte der Öffnungen zu vertikaler Verstellung eines Schwerpunkts des Elementes führt und die Positionierung des Elementes in Querrichtung beibehält, wobei das Element abnehmbar an der Vorrichtung befestigt ist und die zusätzliche Neigung in einer Richtung, die normalerweise durch eine Element-Trageeinrichtung verhindert wird, erzielt wird, ohne den Drehmittelpunkt oder das Gleichgewicht des Tragesystems zu ändern.

37. Tragesystem nach Anspruch 11, das eine Kamera umfasst.

## Revendications

1. Système de support de caméra mobile, comprenant :
un système de support stabilisateur télescopique portatif extensible et rétractable (1) pour recevoir et équilibrer de façon dynamique plusieurs éléments (8, 12, 17) pendant l'utilisation, le système comprenant :
un organe de support principal de forme allongée (4) comprenant une extrémité proximale adaptée pour recevoir de façon ajustable et fixer de façon amovible l'organe de support principal (4) à un système de support secondaire (9, 10, 27, 28), et un moyen formant cardan (5) positionné de façon ajustable au niveau du centre de gravité du système de support ;
le système de support secondaire (9, 10 , 27, 28) ayant une extrémité distale et une extrémité proximale, lequel comprend un organe de support de base (10 , 28), au moins un organe de support secondaire télescopique (9, 27) extensible et rétractable depuis l'intérieur de l'organe de support de base (10, 28), une base au niveau de l'extrémité proximale de l'organe de support secondaire (9, 27) étant fixée de façon amovible à l'organe de support de base (10, 28), et comprend un moyen pour positionner par déplacement et de façon stable plusieurs éléments (8, 12), chaque élément étant ajustable de façon adaptable et pouvant être fixé de façon amovible et au moins un élément (8) étant déplaçable de façon ajustable le long de l'organe de support principal (4) ou de l'organe de support secondaire (9, 27), afin de contrebalancer le système de support et de maintenir l'équilibre dynamique de ce dernier ; et
un élément de visualisation (8) ajustable de façon adaptable et pouvant être fixé de façon amovible ;
l'inertie de rotation du système de support pouvant être augmentée selon un axe panoramique alors que les éléments fixés de façon ajustable (8, 12) sont orientés de façon coopérative relativement aux organes de support extensibles et rétractables de façon télescopique pour maintenir l'équilibre du système de support,
**caractérisé en ce que**
l'organe de support principal de forme allongée (4) comprend une extrémité distale adaptée pour recevoir de façon ajustable et fixer de façon amovible un système de support principal (3) et
le système de support principal (3) est extensible et rétractable depuis l'intérieur de l'organe de support principal (4) comprenant une extrémité distale et une extrémité proximale, comprend au moins un organe de support principal télescopique (3) déplaçable par coulissement jusqu'à une distance prédéterminée depuis l'intérieur de l'organe de support principal (4) entre la position rétractée et la position étendue, et un moyen de support de caméra (2) ajustable de façon angulaire et inclinable de façon pivotante fixé de façon amovible sur l'extrémité distale de l'organe de support principal (3) le plus éloigné de l'élément de support principal (4) pour recevoir de façon ajustable et fixer de façon amovible la caméra (17) selon une position prédéterminée,
le système de support principal (3) comprenant plusieurs organes de support principaux télescopiques, le diamètre de chaque organe diminuant relativement à la distance d'un organe depuis l'intérieur de l'organe de support principal.

2. Système de support conformément à la revendication 1 adapté pour le coulissement séquentiel des organes les uns dans les autres, l'organe le plus éloigné de l'organe de support principal pouvant être déplacé par coulissement dans l'organe suivant le plus éloigné et ainsi de suite, séquentiellement.

3. Système de support conformément à la revendication 1, dans lequel une extrémité proximale de l'organe télescopique principal le plus près de l'organe de support principal est extensible et rétractable de façon adaptable depuis l'intérieur de l'extrémité distale de l'organe de support principal.

4. Système de support conformément à la revendication 1, dans lequel une caméra ajustable de façon adaptable et pouvant être fixée de façon amovible est positionnée sur le moyen de support de caméra ajustable de façon angulaire et inclinable de façon pivotante.

5. Système de support conformément à la revendication 1, dans lequel l'un des éléments est un moyen de visualisation ajustable de façon adaptable et pouvant être fixé de façon amovible.

6. Système de support conformément à la revendication 5, dans lequel le moyen de visualisation est un moniteur ajustable de façon adaptable et pouvant être fixé de façon amovible.

7. Système de support conformément à la revendication 1, dans lequel l'un des éléments est un poids ajustable de façon adaptable et pouvant être fixé de façon amovible.

8. Système de support conformément à la revendication 7, dans lequel le poids est une batterie ajustable de façon adaptable et pouvant être fixée de façon amovible.

9. Système de support conformément à la revendication 1, dans lequel l'organe de support de base est un cylindre annulaire ajustable de façon adaptable pour recevoir une extrémité proximale de l'organe de support secondaire.

10. Système de support conformément à la revendication 9, dans lequel le cylindre comprend une section longitudinale ouverte adaptée qui le rend accessible pour ajuster, insérer et retirer l'organe de support secondaire.

11. Système de support conformément à l'une des revendications 1 à 10,
dans lequel le moyen de support de caméra ajustable de façon angulaire et inclinable de façon pivotante est fixé de façon ajustable à l'extrémité distale du système de support principal pour la manoeuvre angulaire et la fixation, de façon stable, d'une caméra ajustable de façon adaptable et fixée de façon amovible, le centre de rotation de la caméra étant situé au niveau d'un point qui est congru au centre de gravité d'un élément, lequel est supporté sur une plaque de support et est espacé d'une ligne centrale verticale du système de support principal, si bien qu'un équilibre dynamique approximatif est maintenu pendant le fonctionnement de l'appareil et de la caméra, comprenant
une plaque interne comprenant un moyen de liaison interne pour recevoir de façon adaptable et fixer de façon amovible la plaque interne à l'extrémité distale du système de support principal,
un moyen de montage interne pour fixer de façon adaptable et amovible la plaque interne à une plaque de support, la plaque de support comprenant un moyen de liaison de plaque pour recevoir de façon adaptable et fixer de façon amovible la plaque de support à l'extrémité distale du système de support principal,
un moyen de réception de plaque pour recevoir de façon adaptable et fixer de façon amovible la plaque interne,
un moyen de réception d'élément pour recevoir de façon adaptable et fixer de façon amovible l'élément,
un moyen d'inclinaison pouvant être libéré de façon ajustable et fixé de façon amovible comprenant plusieurs ensembles de paires d'ouvertures latéralement symétriques pour incliner de façon adaptable et positionner de façon ajustable la plaque de support et l'élément fixé de façon amovible selon une position prédéterminée, dans lequel une ouverture comprend une fente ou autre moyen de positionnement ou d'alignement angulaire pour permettre l'ajustement,
un moyen de fixation d'appareil ajustable pour fixer de façon adaptable et ajustable l'appareil selon une position angulaire prédéterminée relativement à l'extrémité distale de l'organe de support principal.

12. Système de support conformément à la revendication 10, dans lequel les ensembles de paires d'ouvertures sont configurés de façon adaptable pour pouvoir ajuster l'appareil sur et le faire coulisser jusqu'à toute position le long de l'ouverture pour ajuster le mouvement angulaire de l'appareil.

13. Système de support conformément à la revendication 10, dans lequel les rayons diffèrent pour chaque ouverture d'une paire d'ouvertures, les rayons étant concentriques par rapport à un point dans l'espace coïncident avec un centre de gravité d'un élément fixé de façon amovible sur l'appareil pour fournir un dégagement vertical additionnel.

14. Système de support conformément à la revendication 13, dans lequel une ouverture est au moins partiellement arquée.

15. Système de support conformément à la revendication 14, dans lequel les ouvertures sont configurées de façon adaptable pour permettre un décalage vertical dans le centre de gravité de l'élément fixé de façon amovible sur la plaque de support tout en maintenant la position latérale de l'élément.

16. Système de support conformément à la revendication 13, dans lequel l'élément est une caméra.

17. Système de support conformément à l'une quelconque des revendications 1 à 16, comprenant en outre :
un système de raidissement adapté à deux axes pour augmenter la rigidité et amortir la vibration du système de support de caméra mobile comprenant une extrémité de support principale et une extrémité de support secondaire, comprenant :
un moyen d'écartement comprenant plusieurs parties d'écartement ajustables de façon stable positionnées de façon amovible selon une ou plusieurs positions sur le système de support, chaque partie d'écartement s'étendant vers l'extérieur relativement à un moyen de montage d'écartement, et comprenant un moyen de réception de tenseur ajustable de façon adaptable, ce qui permet ainsi de faciliter l'amortissement des vibrations et d'améliorer la stabilisation de l'organe de support principal et des éléments fixés de façon amovible au système de support ; eu
un moyen formant tenseurs entre l'extrémité de support principale, la partie d'écartement et l'extrémité de support secondaire comprenant : au moins un tenseur fileté de façon amovible, formant sensiblement un triangle le long d'un trajet de tenseur de l'extrémité de support principale à l'extrémité de support secondaire, dans lequel le tenseur est ajustable de façon stable et adaptable en termes de tension pour l'équilibre statique et le raidissement horizontal et vertical du système de support, un moyen de fin de tenseur dans lequel un tenseur est ajusté de façon adaptable pour être en tension et est fixé de façon amovible, raidissant ainsi le système de support le long de plusieurs axes approximativement perpendiculaires,
l'augmentation de la rigidité et du raidissement améliorant la performance opérationnelle du système de support.

18. Système de support conformément à la revendication 17, dans lequel le tenseur est un organe de mise en tension non étirable.

19. Système de support conformément à la revendication 18, dans lequel l'organe est un fil ou une ligne.

20. Système de support conformément à la revendication 18, dans lequel l'organe est mis en tension par un opérateur qui tend l'organe en le tirant.

21. Système de support conformément à la revendication 18, dans lequel l'organe est mis en tension en ajustant par coulissement une extrémité de support principale, une extrémité de support secondaire, ou les deux.

22. Système de support conformément à la revendication 18, dans lequel au moins l'un des éléments fixés de façon amovible est compris dans le trajet de tenseur, si bien qu'un organe est mis en tension en ajustant par coulissement lesdits éléments fixés de façon amovible.

23. Système de support conformément à la revendication 22, dans lequel l'organe est mis en tension par un opérateur qui tend le fil en le tirant ; en ajustant par coulissement une extrémité de support principale, une extrémité de support secondaire, ou les deux, et en ajustant par coulissement les éléments fixés de façon amovible.

24. Système de support conformément à la revendication 17, dans lequel le moyen de fin de tenseur est fixé de façon amovible sur les éléments fixés de façon amovible.

25. Système de support conformément à la revendication 24, dans lequel l'un des éléments est un moniteur.

26. Système de support conformément à la revendication 24, dans lequel l'un des éléments est une batterie.

27. Système de support conformément à la revendication 17, dans lequel l'extrémité de support principale et l'extrémité de support secondaire du système de support sont extensibles et rétractables de façon télescopique.

28. Système de support conformément à la revendication 17, dans lequel le système de support est précontraint en mettant en tension les tenseurs pour plier légèrement le système de support dans une direction des positions d'écartement, ce qui réduit ainsi les vibrations du système.

29. Système de support conformément à la revendication 17, dans lequel le moyen formant tenseurs comprend plusieurs tenseurs

30. Système de support conformément à la revendication 29, dans lequel les tenseurs sont constitués par un organe bidirectionnel continu pour mettre en tension le système de support.

31. Système de support conformément à la revendication 30, dans lequel l'organe fileté le long du trajet de tenseur forme un triangle de façon bidirectionnelle lorsqu'il est mis en tension.

32. Système de support conformément à la revendication 31, dans lequel le système de support est contraint de façon bidirectionnelle en mettant en tension l'organe continu.

33. Système de support conformément à l'une des revendications 1 à 32 comprenant en outre :
un dispositif pour rétracter des fils électriques internes dans le système télescopique, comprenant un faisceau de fils électriques enroulés en spirale fixé de façon adaptable au niveau de chaque bobine à un organe élastique précontraint, l'organe élastique étant positionné longitudinalement dans le faisceau de fils enroulés en spirale.

34. Système de support conformément à la revendication 33, dans lequel le faisceau de fils enroulés en spirale est enroulé autour de l'extérieur d'un mandrin cylindrique et est positionné longitudinalement dans le faisceau de fils enroulés en spirale.

35. Système de support conformément à la revendication 11, dans lequel le système de support permet à un opérateur de changer une attitude d'inclinaison d'un élément fixé de façon amovible sur l'appareil indépendante de l'angle vertical du système de support, ce qui permet d'équilibrer des éléments coopérant du système de support et de réduire les interférences physiques et les problèmes de dégagement d'élément de système de support.

36. Système de support conformément à la revendication 11, dans lequel l'inclinaison de l'appareil le long des parties non arquées des ouvertures ajuste le centre de gravité d'un élément verticalement et maintient le positionnement latéral de l'élément, l'élément étant fixé de façon amovible sur l'appareil et l'inclinaison additionnelle étant obtenue sans modifier le centre de rotation ou l'équilibre du système de support, dans une direction typiquement empêchée par un moyen de support d'élément.

37. Système de support conformément à la revendication 11 comprenant une caméra.
